# EUROPEAN PATENT SPECIFICATION

(11) **EP 2 506 454 B1**
(45) Date of publication and mention of the grant of the patent: **16.11.2016**
(21) Application number: 10812861.2
(22) Date of filing: 24.11.2010
(51) Int. Cl.: H04B 7/26, H04W 4/24

(54) **SERVICE PROVISION SYSTEM, METHOD AND REPEATER**
DIENSTBEREITSTELLUNGSSYSTEM, VERFAHREN UND REPEATER
RELAIS, PROCÉDÉ ET SYSTÈME DE FOURNITURE DE SERVICE

(30) Priority: 25.11.2009 ES 200931053
(43) Date of publication of application: 03.10.2012
(73) Proprietor: Telefónica, S.A., 28013 Madrid (ES)
(72) Inventor: IGLESIAS ARRIBAS, Victor, E-28013 Madrid (ES); CUCALA GARCIA, Luis, E-28013 Madrid (ES)
(74) Representative: Carpintero Lopez, Francisco
(86) International application number: PCT/ES2010/070771
(87) International publication number: WO 2011/064433

(56) References cited:
- WO-A1-2009/076995
- KR-B1- 100 791 599
- US-A1- 2003 054 796
- US-A1- 2005 197 098

## Description

### Field of the Invention

The present invention applies to the field of the mobile or cellular communications networks and, more specifically, to the rating and call identification from mobile or cellular terminals.

### Background of the Invention

An in-home repeater is a piece of equipment which allows improving the coverage level inside the home or small business of a client provided there is a minimum coverage level outside the same.

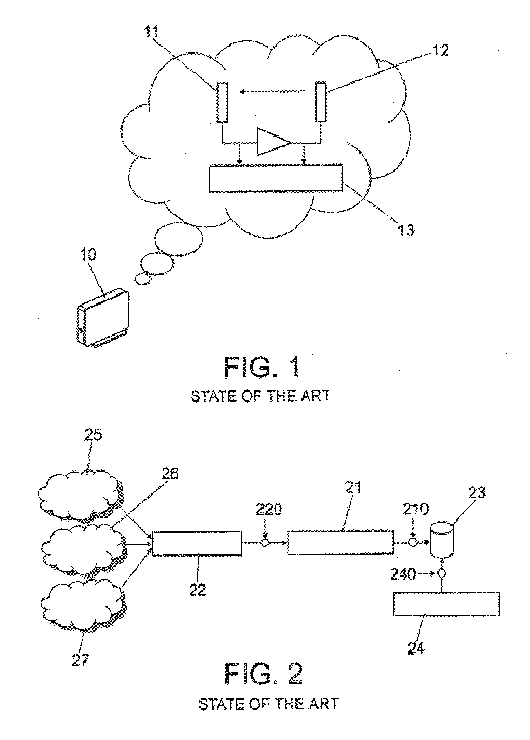

Figure 1 shows the conceptual diagram of a conventional in-home repeater 10, which is a device which, by means of an antenna 11, referred to as the donor antenna, captures the radio signal from a macrocell and radiates it inside a dwelling by means of another call coverage antenna 12, both antennas being compactly integrated in the same piece of equipment to minimize their visual impact.

These repeaters 10 can, though they do not necessarily, implement a series of interference cancellation algorithms 13 which eliminate the echoes which are transmitted directly between antennas and thus maximize the gain of the repeater despite the limited insulation between the donor antenna 11 and coverage antenna 12. There are currently several methods which allow eliminating, within certain margins, the feedback between antennas. These methods and algorithms are proprietary of each provider. By way of example, the company RF Window offers the ICS Mini model (http://www.rfwindow.com/products/product_1.php), which integrates the donor antenna and the coverage antenna in the same piece of equipment, and which implements echo cancellation methods by means of digital signal processing in order to remove feedbacks between the donor antenna and coverage antenna which can give rise to oscillations. Another example is the company Retemsa, which offers the Easyboost model (http://www.retemsa.com/html/pdf/easyboost/ EasyBoost.pdf), also with integrated antennas and implementing a proprietary method for amplification chain switching which minimizes feedback between the donor antenna and coverage antenna. A third example is the company Coiler, which offers the repeater called Atom 2200 http://www.coiler.com.tw/products umts repeaters.asp#4), which only incorporates the coverage antenna in the same piece of equipment and does not implement any method for minimizing feedback between the donor antenna and coverage antenna.

On the other hand, there are special rate services, sometimes known as Home Zone, which offer clients of the in-home or business segments the possibility of making voice calls and data connections with special rates when they comply with a series of location criteria of the subscriber using the service. These location criteria are associated with a particular radio coverage zone indicated by the client at the time of contracting the service. When the user is within the specified radio coverage, the special rates stipulated for the case are applied.

Although the technical details of the implementation of Home Zone-type rates are proprietary of each telecommunications operator and are not public, some examples which are presumably based on the position of the mobile terminal to offer reduced rates can be offered. An example is the Genion service of Telefónica 02 Germany, which offers reduced rates when calls are made from the vicinity of the client's home.

At present, the area in which the special rate, or Home Zone, of a client is applied is calculated by means of the zip code provided by the latter when requesting the service. This zip code is fixed as the theoretical center of his Home Zone, the theoretical coverage area being that comprised within a circumference with radius "R" centered on the zip code provided by the client. In other words, depending on the size of the radius "R", there may be several mobile telephony cells providing service in the selected coverage area. These cells are automatically assigned to the Home Zone of the client and provided that he makes a call or sets up a data connection from said cells, he will obtain a special rate, which includes not only his home but also the entire coverage area demarcated by the cells assigned to his Home Zone.

Figure 2 shows a diagram of the conventional rating process, as they are implemented in the networks of mobile operators. Specifically, the process requires:
- A mediation system 22 which, from the rating point of view, is in charge of processing the records of the calls which are generated through the Mobile Switching Centers (MSC) 25 for circuit switching based services, such as voice, of processing records of the Charging Gateways 26 in packet switching networks and of processing the records of the short message center 27 in the case of SMS type text messages, and on the other hand of sending 220 these records to the rating module 21 in a format compatible with the latter. The records of the calls are referred to as Call Detail Records (CDR) and their information fields include the telephone number which starts the call, the target telephone number, the date and start time of the call, the date and end time of the call, the duration of the call, the identifier of the source cell and the type of call.
- A client database 23, which includes all the information associated with the client: home, contracted rates and discount plans.
- A rating module 21, which is in charge of collecting payment from the client depending on the CDR it receives 220 from the mediation system 22 and on the rate contracted by the client, the latter being accessible from the client database 23, in which the rating module 21 performs queries 210.
- Commercial systems 24, which can be shops or official distributors of the mobile operator, in which the client can register for a service or contract a savings plan. These commercial systems 24 manage the registrations/cancellations 240 in the database 23.

Going back to in-home repeaters, they are transparent equipment from the radio signal point of view which they process, as they are limited to taking a radio signal from the base station or from a mobile terminal located in the home of the client, and reamplifying it in order to be able to emit it with a higher power level, it being the only treatment they perform aimed at preventing radio oscillations due to the feedback between the two antennas of the repeater.

This means that at present, the mobile operator does not have the possibility to control the geographic position in which an in-home repeater is installed, or identifying the calls which are being carried through the in-home repeaters installed on site, or when they are made, what type they are or who makes them, or evaluating the impact of in-home repeaters on the remaining mobile radio network.

The current way to check the impact caused by including a repeater in the radio access network is to check the statistics of the traffic carried by the base station to which the in-home repeater is connected and to observe the evolution of the traffic before and after installing the in-home repeater. However, this method is only valid in the event that there is a single in-home repeater, because if several in-home repeaters are connected in the same cell, the traffic corresponding to each of them cannot be distinguished.

On the other hand, there is also no network solution which enables the possibility of providing a special rate only in the home of the client, because as has been described in the previous section, zone rates allow the user to enjoy a reduced rate in a relatively broad radio coverage zone which is not exclusively limited to the range of a home.

This is because there is no type of mechanism which allows the mobile operators to offer an economic rate restricted to the home of the client from the macrocellular and microcellular radio coverage network.

In summary, the current radio network based on macrocellular, microcellular base stations and in-home repeaters, has the following limitations: On one hand, the solutions based on the use of in-home repeaters currently do not allow differentiating traffic carried through the in-home repeater from that carried by the base station as a whole. On the other hand, a price policy specific to the coverage zone corresponding to a single home or small business cannot be implemented.

Examples of charging systems using repeaters are disclosed in US2005/0197098 and US2003/0054796. 15

### Summary of the Invention

The present invention is defined by the appended claims 1 to 6. The present invention tries to solve the aforementioned problems by means of a repeater which allows the clients who have it to have available to them a differentiated rate in calls or data connections made from the home or office in which the repeater is installed. The invention also provides a method for the provision of call identification and rating service and a system for the provision of call identification and rating service.

Specifically, in a first aspect of the present invention, a mobile telephony repeater configured to provide service to at least one mobile terminal is provided. The repeater comprises: a radio modem configured to be connected to a cell of a mobile telephony network and to receive the identifier of the cell from said cell; means for detecting an uplink call; means for activating/deactivating the radio uplink, configured to: activate the radio uplink when an uplink call is detected and to deactivate said radio uplink when an uplink call is not detected.

Preferably, the radio modem is configured to: send a message to a node of said mobile telephony network reporting that the repeater is carrying traffic when said means for detecting an uplink call detect a call; send a message to a node of said mobile telephony network reporting that the repeater is not carrying traffic when said means for detecting an uplink call do not detect a call.

Preferably, the repeater is an in-home repeater.

The call can be a data or voice call.

### Brief Description of the Drawings

For the purpose of aiding to better understand the features of the invention according to a preferred practical embodiment thereof and to complement this description, a set of illustrative and non-limiting drawings is attached as an integral part thereof. In these drawings:
Figure 1 shows a diagram of a conventional in-home repeater.
Figure 2 shows a diagram of the conventional rating process.
Figure 3 shows an in-home repeater device and a diagram of the method for call identification according to an embodiment of the present invention.
Figure 4 shows a diagram of the process for the provision and communication between the in-home repeater and the rating system according to an embodiment of the present invention.
Figure 5 shows an algorithm for detecting calls with a special rate according to an embodiment of the present invention.
Figure 6 shows in detail an aspect of the algorithm for detecting calls with a special rate of the present invention.

### Detailed Description of the Invention

Throughout this specification, the term "comprises" and variations thereof must not be interpreted as having an excluding or limiting meaning, i.e., it must not be interpreted in the sense that it limits the possibility that the element or concept to which it refers can include additional elements or steps.

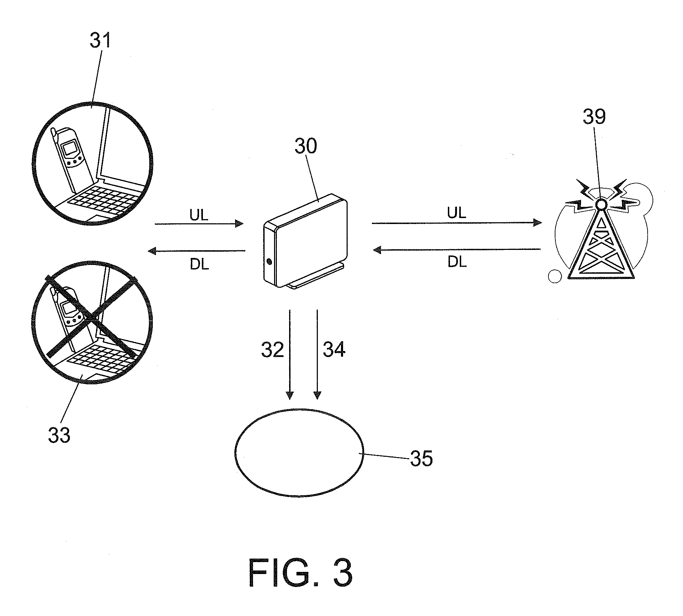

Figure 3 shows a repeater device 30 and a diagram of the system and method for call identification and for the provision of a rating service according to an embodiment of the present invention. The repeater 30 is preferably an in-home repeater.

The repeater 30 incorporates among its modules and functionalities a radio modem and a system for turning off the uplink (UL) in the absence of traffic, whether it is voice or data traffic.

The repeater 30 is connected to a cell 39 of a mobile telephony network through its radio modem and can receive the identifier of the cell from said cell 39. In other words, the radio modem is used to be connected to a cell of the mobile telephony network and to receive the identifier of the radio cell or cells providing service to the repeater 30. The radio modem is also used to send messages (for example, and without limiting the possibility of other technologies, SMS or Short Message Service-type messages) to a node of the mobile operator's network which is in charge of processing them and which is described below. The repeater 30 can provide service to one or several mobile terminals, according to what has been contracted with the service provider.

The repeater comprises means for detecting an uplink (UL) call and means for activating/deactivating the radio uplink. These means activate the radio uplink when an uplink (UL) call is detected and deactivate it when an uplink (UL) call is not detected or when the end of the call is detected.

The radio modem also serves for the following: when the means for detecting an uplink (UL) call detect a call, they send a message 32 to a node 35 of the mobile telephony network reporting that the repeater 30 is carrying traffic; and when the means for detecting an uplink (UL) call do not detect a call, they send a message 34 to that node 35 reporting that the repeater 30 is not carrying traffic. The node 35 is preferably a repeater server, as described below.

The system for activating/deactivating or turning on/off is used to (a) identify when the repeater 30 is carrying traffic in its uplink (UL); and (b) generate messages, which are sent by means of the modem, depending on whether or not the repeater 30 is carrying traffic.

Therefore, a method for call identification is implemented by means of (a) the repeater (preferably an in-home repeater) 30, (b) the call identification algorithms necessary in the same repeater 30 and in the mobile operator's network, which are described below, and (c) the network elements necessary in the mobile operator's network, which are illustrated below.

The modem of the repeater 30 of the client has a telephone number associated therewith. Furthermore, the repeater has cells assigned thereto, with their corresponding identifiers, to which its modem can be connected. As will be explained below, these cells are determined based on the information of the home or business (in which the repeater 30 will be installed) of the client, such that said home is converted into geographical coordinates which serve as input datum in a computation program which identifies the cells of the mobile operator providing service to that home or location.

Figure 3 conceptually shows the use of the system for activating/deactivating or turning on/off and of the modem:
When the repeater 30 detects that there is traffic 31, it turns on its uplink (UL) radio chain and sends a message 32 through the modem to the node 35 of the network to indicate that a repeater 30 is carrying traffic (turned on or activated). In the moment that the repeater 30 does not detect traffic 33, it turns off the uplink (UL) and sends a message 34 to the node 35 of the network indicating the cease of activity (turned off or deactivated) of the repeater 30.

The format of the message 32 that is sent from the repeater 30 by means of the modem in the event that it is carrying 31 traffic is the following:

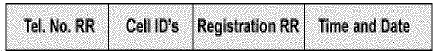

wherein:
"Tel. No. RR" is the telephone number associated with the modem of the repeater 30 of the client.
"Cell ID's" is the list of the cells to which the modem of the repeater 30 can connect.
"Registration RR" indicates that it is an activity registration event in a repeater 30.
"Time and Date" identify the date of registration time and date of the repeater 30.

The format of the message 34 which is sent from the repeater 30 in the event that traffic is no longer carried is the following:

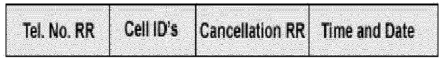

wherein:
"Tel. No. RR" is the telephone number associated with the modem of the repeater 30 of the client.
"Cell ID's" is the list of the cells to which the modem of the repeater 30 can connect.
"Cancellation RR" indicates that it is an activity cancellation event in a repeater 30. "Time and Date" identify the cancellation time and date of the repeater 30.

The method for the provision of the rating service for a differentiated or special rate for clients who have one or more repeaters of the type hereinbefore described is described below.

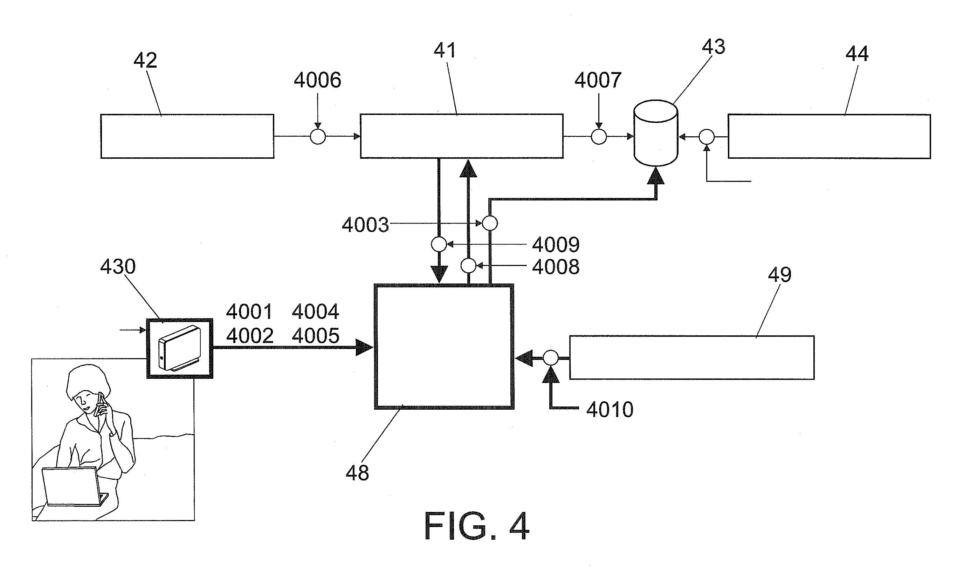

Figure 4 shows a diagram of the process for the provision and rating to implement a special rate based on the use of repeaters, preferably in-home repeaters. This figure is also used to explain the process for communication between the repeater and the rating module.

With respect to the conventional rating module 21 shown in Figure 2, the rating module 41 of the invention includes a new node or piece of equipment of the network, referred to as repeater server 48, which on one hand is in charge of processing all the messages reaching it from the repeaters 430, and on the other hand of communicating with the rating module 41, with the planning tools 49 of the mobile operator and with the client database 43, as is described in the following sections. The system also comprises a mediation system 42 and commercial systems 44. The mediation system 42 is in charge of processing the records of the calls which are generated through the Mobile Switching Centers (MSC) for the circuit switching based services, such as voice, of processing the records of the Charging Gateways in packet switching networks and of processing the records of the short message center in the case of SMS type text messages, and on the other hand of sending 4006 these records to the rating module 41 in a format compatible with the latter. The records of the calls are referred to as Call Detail Record (CDR) and their information fields include the telephone number which starts the call, the target telephone number, the date and start time of the call, the date and end time of the call, the duration of the call, the identifier of the source cell and the type of call. The commercial systems 44, which can be shops or official distributors of the mobile operator, allow the client to register for a service or contract a savings plan. These commercial systems 44 manage the registrations/cancellations in the database 43.

First, a process for the provision of the special rate service is provided, which comprises:
- By means of commercial systems 44, the client purchases the repeater 430 to improve the coverage level in his home or business.
- The mobile operator offers the client the possibility of having a special rate in his home through the repeater 430. To that end, the repeater 430 has a modem incorporating a SIM (Subscriber Identification Module) card with a telephone number associated therewith. This card only allows sending /receiving information to/from a determined telephone number to avoid possible fraud. This telephone number is that of the repeater server 48. The repeater server 48 is a node of the mobile operator's network which receives 4001 all the messages from the group of repeaters and is in charge of processing them.
- The client provides information about his home and a list of mobile telephones (at least one) enabled to have the special rate service.
- The information of the home is converted into geographical coordinates which serve as input datum in a computation program which identifies the cells of the mobile operator providing service to that home.
- The information of the cells associated with the home, of the telephone associated with the repeater 430 and the mobile telephones enabled to have the service are dumped through the commercial systems 44 into the client database 43 of the operator.

Once the client has installed the repeater 430 in his home, the following actions occur:
- The modem associated with or included in the repeater 430 is activated, is recorded in the mobile operator's network and identifies which cell is connected and which are the neighboring cells.
- Based on this information, the repeater 430 sends a message 4002 by means of the modem to the repeater server 48, communicating to it the cell to which it is connected and the list of neighboring cells.
- The repeater server 430 makes a query 4003 in the client database 43 in order to know if the cell to which the repeater 430 has been connected, or his list of neighboring cells, coincides with the list of cells that the operator expects will provide service to the repeater 430 based on the geographical coordinates of his home.
- If they coincide, the repeater server 430 activates the repeater 430. If they do not coincide, depending on the mobile operator's network and commercial policy, the mobile operator may reserve the right to disable the working of the repeater 430. For this purpose, the repeater server 48 sends a message to the modem of the repeater 430 indicating whether or not it is enabled to transmit, turning off the uplink radio amplification chain or not.

In the event that the repeater 430 is enabled to transmit and if a mobile terminal starts a call, the following actions occur:
- The repeater 430 detects activity in the uplink, as has been explained in relation to Figure 3, and sends an activity start message 4004 to the repeater server 48. This allows knowing when the repeater 430 has been activated as a consequence of a call carried by it, to subsequently compare it with the start time of the call and the source telephone number, because once the call is started, a CDR (Call Detail Record) which stores the information relating to the current call is generated. This CDR can be generated through the Mobile Switching Centers MSC if it is a voice call or through Charging Gateways if it is a data call. On the other hand, if the message sent 4004 by the modem of the repeater is an SMS type message, a CDR is automatically generated through the Short Message Center, which CDR is sent to the mediation system 42. The mediation system 42 has previously received the indication that all the messages which are sent to the telephone number assigned to the repeater server 48 have to be disregarded from the rating point of view, such that they are not sent to the rating module 41.
- Once the call has ended, the repeater 430 detects that there is no activity in the uplink and sends a message 4005 to the repeater server 48 indicating the end of activity. This allows knowing when the repeater 430 has been deactivated as a consequence of the end of the calls carried by it, to subsequently compare this with the end time of the call and the source telephone number, because once the call has ended, the CDR which had been generated with the start thereof is closed and is sent to the mediation system 42. This CDR can be generated through the MSC if it is a voice call or through Charging Gateways if it is a data call. The mediation system 42 processes it and sends it 4006 in a format compatible with the rating module 41. The CDR associated with the SMS sent by the modem of the repeater 430 is thus disregarded in the mediation system 42, as previously indicated.

- The rating module 41 accesses 4007 the client database 43 to check the payment collection plan associated with the client. In this case, if it is a client with a special rate associated with the repeater 430, it performs the checks described in further detail below and communicates with the repeater server 48 for the purpose of identifying if the repeater 430 has been active during the time period in which the call of the client has been carried.
- The planning tools 49 collect from the repeater server 48 location information 4010 through the identifier of the cell sent by the modem of each repeater in each of its messages and different statistics of the traffic carried by the repeaters, individually, per cell. Further information concerning the statistics on the traffic carried by each repeater is provided below.

The process for the reliable identification of calls with clients with a special rate through their repeater, preferably an in-home repeater, is described below.

The special rate services for clients with an in-home repeater must be able to identify all the situations that may occur in the home of the client for the purpose of reliably identifying the calls that are indeed carried through the repeater by means of the mobile telephones included in the special rate because there may be several mobile telephones which can benefit from the special rate service. These situations are described below:
- A single connection within the home through one of the telephones associated with the service. In this case, there is no type of rating problem because the start and end time of the call reported by the CDR coincides with the start and end of the activity in the repeater, being rated with a special rate.
- Several connections within the home or office through several telephones associated with the special rate service. In this case, there is no type of rating problem either because the calls will be within the turned on interval of the repeater and will be rated with a special rate.
- A user with a special rate based on a repeater, preferably an in-home repeater, in his home visits the home of another client who has another repeater of the same type, who also is also making a call. There is no rating problem because each repeater has a different list of telephone numbers assigned thereto. In this case, a normal rate is applied to the visiting user.
- One or several connections within the home through the repeater, and one or several simultaneous connections from outside the home through telephones associated with the special rate service, which coincide with activity in the in-home repeater. In this case, the calls made from outside the home which coincide both with activity in the repeater and with the identifier of the cell communicated by the repeater in its messages will be considered as having a special rate.

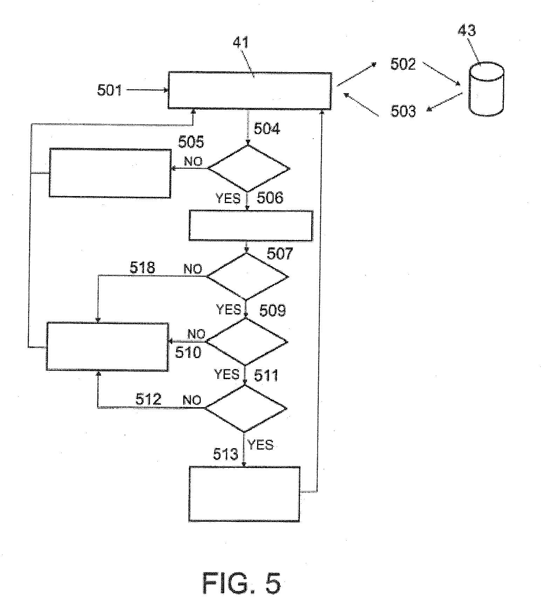

To correctly rate the situations described in the previous paragraph, a call identification algorithm is implemented in the rating module 41 through the repeater 30, 430, which allows rating the call quickly enough so that once the user ends the call, he can check the rating that has been applied through his bill in virtually real time. Figure 5 describes the process for call identification for calls with a special rate performed by the rating module 41.

The description of the algorithm is the following:
- First, the rating module 41 receives from the mediation system 42 the CDR associated with the call that has been carried 501. Information about the calling telephone number, the called telephone number, date and start time, duration of the call, source cell and type of call is sent in this file.
- With this information, the rating module 41 accesses the client database 43 and checks the plan associated with the client 502 and if the user has contracted a type of special rate 503. At this time, the rating module 41 knows that the client has an associated special rate service (in the event that this is indeed the case).
- Once it has been detected that the client has a special rate service, the rating module 41 makes a comparison 504 between the source cell of the CDR and the cells associated with the repeater 30 430 in the database 43. If they do not coincide 505, the special rate is not applied (because, for example, the client is not at his home), but if they do coincide 506, the rating module 41 sets up communication with the repeater server 48 so that the latter can confirm whether or not it is a call with a special rate. At the time of setting up the communication, the rating module 41 sends the following information to the repeater server 48 so that the repeater server 48 performs a series of comparisons for the purpose of identifying whether or not if it is a call with a special rate:
   1. Telephone number associated with the modem of the repeater of the client who has set up the call.
   2. Date and start time of the CDR associated with the client.
   3. Date and end time of the CDR associated with the client.
   4. Identifier of the cell from which the call has been made.

Additionally, and for statistical purposes which will be explained below, the rating module 41 sends the type of call that has been carried (voice, data) to the repeater server 48.
- The following checks are performed in the repeater server 48: First, it checks if the repeater was active, through the telephone number associated with the modem of the repeater, at the start time of the call included in the CDR 507. If it was not active 508, it is indicated to the rating module 41 that it is not a call with a special rate. However, if the repeater was active 509, a new check is performed in order to know whether or not the repeater was active in that precise moment at the end time of the call included in the CDR). If it was not active 510 in that precise moment, it is indicated to the rating module 41 that it is not a call with a special rate. In contrast, if it was active right in that moment, a final check is performed depending on the source cell of the call reported by the CDR and on the cell providing service to the modem of the repeater 511. If they do not coincide 512, it is indicated to the rating module 41 that it is not a call with a special rate, and if they do coincide 513 it is indicated that it is a call with a special rate.

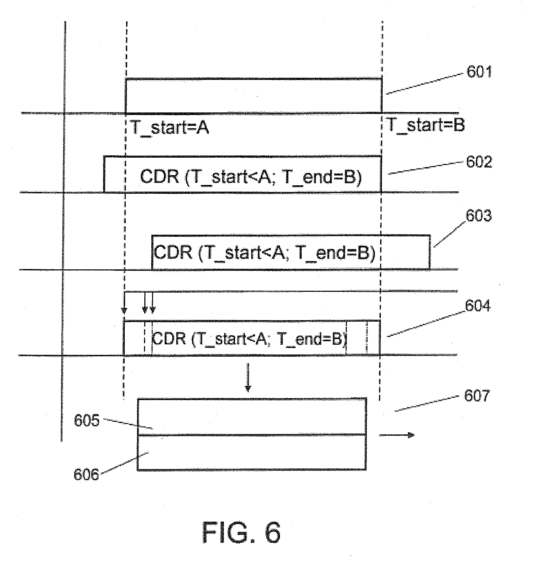

In summary, the activity start and end times of the repeater are compared with the start and end times of the calls which have been made through the different CDR, and the identifier of the cell reported by the modem of the repeater is compared with the identifier of the cell of the call reported through the CDR. These concepts are further clarified in the following Figure 6.

First, the activity period in the repeater is shown 601. The following case 602 shows a situation in which a special rate is not applied. The third case 603 shows another situation in which a special rate is not applied. The fourth case 604 shows several calls occurring within the activity period of the repeater. After the modem of the repeater 605 reports the identifier of the cell and after the CDR reports the identifier of the cell, it evaluates if they both coincide, in which case a special rate is applied.

Since it is a method based on sending messages which can be supported by means of SMS, and since these SMS are asynchronous, the moment of arrival of the SMS cannot be assured. However, during the time that the call lasts and the payment collection CDR is sent to the rating module, there is time for the start of activity SMS in the repeater to arrive in the repeater server. The call identification algorithm does not require the arrival of the end of activity message of the in-home repeater to allow the rating modules to be able to start provisionally applying the special rate, which will only be definitively applied if the end of call information reported by the CDR indicates an end of the call prior to the end of activity of the repeater, reported by the end of activity message of the repeater, once this is received.

Finally, the system and method of the invention allow identifying the traffic carried by each repeater 430 and obtaining statistics thereof. To that end, the repeater server 48 orders and processes all the messages it receives from the different repeaters installed on-site of the operator with the format described above. Furthermore, the type of call that the client of the service has made is included in the call from the rating module 41 to the repeater server 48. This allows the repeater server 48 to indicate in the message that it has received the start of activity, the type of calls the repeater is carrying at all times and their duration, because the rating module 41 also sends in the associated CDR information about the start and end time and the type of each call.

After a time period determined by the mobile operator, the repeater server 48 generates a file which includes all the information which can be accessed from the planning tools 49. The planning tools 49 access said file through a connection to the repeater server 48, which can be an SFTP (Secure File Transfer Protocol) type. SFTP is a secure method for transferring files because it encrypts both the password and the data. The file contains individualized information of each repeater and of the set of repeaters in the same cell. Given the individualized nature of the defined method, all the data can be extrapolated to a set of cells or to the desired environment.

The following information can be extracted from the format of message that has been defined and from the data sent by the rating module 41 to the repeater server 48:
- Location of the repeater through the information of the cell.
- Traffic carried by the repeater depending on the activity time thereof.
- Traffic carried in a cell by the repeaters therein or in a location area, because since it has individualized information of each repeater, all the possible combinations can be made.

- Time slot having the greatest activity, both by repeater and by cell or location area.
- Type of calls that the repeater is carrying during its activity and duration thereof. This information can also be extrapolated to cell or location area.

This information serves for the planning tools 49 to be able to track the performance of the repeaters in the network and perform a more suitable planning depending on the data obtained through the repeaters.

In summary, the invention allows offering a new service for accessing the radio mobile network with special rates exclusive for a very delimited coverage zone. The method and system described assure in most cases that the rating of the service is applied to the clients who are making use of the repeater, preferably an in-home repeater, from inside their home or small business, or in their most immediate vicinity.

The invention also allows accurately distinguishing and characterizing the traffic carried by each repeater from the total traffic aggregated in the base station.

The invention also allows characterizing the profile of the user of the service supported by the repeater, because it is possibly to accurately know the time slots for using the service, the type of calls and the duration thereof.

The invention also allows linking the data obtained from the repeaters with the planning tools of the mobile operator so that the latter can track the performance of the mobile network and perform suitable planning.

Finally, the invention allows limiting the place where the repeater operates, restricting its use to the environment of the home indicated by the client when contracting the service.

In view of this description and set of drawings, the person skilled in the art will understand that the invention has been described according to several preferred embodiments thereof, but multiple variations can be introduced without departing from the object of the invention as it has been claimed.

## Claims

1. Method for the provision of a service in a mobile telephony network comprising at least one repeater (30, 430) configured to be connected to at least one cell (39) of a mobile telephony network and to provide service to at least one mobile terminal, wherein a database (504) has stored therein the identifiers of said at least one cell (39) associated with said repeater (30, 430), wherein the method comprises:
- reporting (32, 4004) the activation of the repeater (30, 430) to a repeater server (48) and generating a Call Detail Record (CDR) in order to store information of said call when said repeater (30, 430) detects the start of an uplink (UL) call;
- reporting (34, 4005) the deactivation of the repeater (30, 430) to said server (48) and closing said Call Detail Record (CDR) when said repeater (30, 430) detects the end of said call;
- sending the information (4006) of said Call Detail Record (CDR) to a rating module (41);
- checking if the client has an associated special rate service based on said information (4006);
wherein if the client has an associated special rate service, rating is according to said special rate; and,
before rating according to said special rate, the following step is carried out:
- checking if the source cell included in the information of the Call Detail Record (CDR) is one of the cells associated with the repeater (30, 430) stored in said database (504) and, if not (505), not applying said special rate; and
if the source cell included in the information of the Call Detail Record (CDR) is one of the cells associated with the repeater (30, 430), the following step is carried out:
- sending (4008) the following to the repeater server (48): telephone number associated with the repeater (30, 430) of the client who has set up the call; date and start time of the associated Call Detail Record (CDR); date and end time of the Call Detail Record (CDR); and identifier of the cell from which the call has been made;
so that the repeater server (48) can confirm whether or not it is a call with a special rate based on said data;
the method is **characterized in that** the repeater server (48) performs the following checks:
- through the telephone number associated with the repeater (30, 430), it checks if the repeater (30, 430) was active at the start time of the call, and:
- if it was not active (508), it is indicated to the rating module (41) that it is not a call with a special rate;
- if it was active (509), a new check is performed in order to know whether or not the repeater was active at the time of ending the call, and:
- if it was not active (510), it is indicated to the rating module (41) that it is not a call with a special rate;
- if it was active a check is performed (511) depending on the source cell of the call and on the cell providing service to the repeater (30, 430), and:
- if they do not coincide (512), it is indicated to the rating module (41) that it is not a call with a special rate;
- if they do coincide (513), it is indicated that it is a call with a special rate.

2. Method of claim 1, wherein said information (4006, 501) of said Call Detail Record (CDR) comprises: the calling telephone number, the called telephone number, date and start time of said call, duration of said call, source cell and type of call.

3. Method of any of the previous claims, comprising the step of distinguishing and characterizing the traffic carried by the repeater (30, 430) from the total traffic aggregated to the cell (39).

4. Method of any of the previous claims, comprising the step of characterizing the profile of the user of the service supported by said repeater (30, 430) based on the information of said Call Detail Record (CDR).

5. Method of any of the previous claims, comprising the step of limiting the operating range of said repeater (30, 430) to a determined area calculated from the coordinates of the home or office of the user.

6. System for the provision of a service in a mobile telephony network, comprising:
- a mobile telephony repeater (30, 430) configured to be connected to at least one cell (39) of a mobile telephony network and to provide service to at least one mobile terminal,
- a database (504) configured to store the identifier of said at least one cell (39) associated with said repeater (30, 430),
- a rating module (41),
- a repeater server (48) configured to receive from said repeater (30, 430) a message (32) reporting that the repeater (30, 430) has begun to carry a call or a message (34) reporting that the repeater (30, 430) has finished carrying a call, wherein said repeater server (48) is configured to generate a Call Detail Record (CDR) in order to store information of said call, to close said Call Detail Record (CDR) and to send the information (4006) of said Call Detail Record (CDR) to said rating module (41);
wherein said rating module (41) is configured:
- to check if the client has an associated special rate service based on said information (4006), and
- to rate according to said special rate if the client has an associated special rate service; and wherein
before rating according to said special rate, said rating module (41) is configured to check if the source cell of the call is one of the cells associated with the repeater (30, 430) and if it is, to send (4008) the following to the repeater server (48): telephone number associated with the repeater (30, 430) of the client who has set up the call; date and start time of the associated Call Detail Record (CDR); date and end time of the Call Detail Record (CDR); and identifier of the cell from which the call has been made;
the system is **characterized in that** said repeater server (48) is configured:
- to check if the repeater (30, 430) was active at the start time of the call;
- if the repeater was active at the start time, to check if it was active at the time of ending the call and
- if the repeater was active at the time of ending the call, to check if the source cell of the call and the cell providing service to the repeater (30, 430) coincide and if they do coincide, said repeater server is further configured to indicate that it is a call with a special rate.

## Patentansprüche

1. Verfahren für die Bereitstellung eines Dienstes in einem Mobiltelefonnetz, das zumindest einen Repeater (30, 430) aufweist, der konfiguriert ist, mit zumindest einer Zelle (39) eines Mobiltelefonnetzes verbunden zu sein und zumindest einem Mobilendgerät einen Dienst bereitzustellen, wobei eine Datenbank (504) in derselben die Identifizierer der zumindest einen Zelle (39), die dem Repeater (30, 430) zugeordnet ist, gespeichert hat, wobei das Verfahren folgende Schritte aufweist:
Berichten (32, 4004) der Aktivierung des Repeaters (30, 430) an einen Repeaterserver (48) und Erzeugen einer Anrufdetailaufzeichnung (CDR), um Informationen des Anrufs zu speichern, wenn der Repeater (30, 430) den Start eines Anrufs auf der Aufwärtsstrecke (UL) erfasst;
Berichten (34, 4005) der Deaktivierung des Repeaters (30, 430) an den Server (48) und Schließen der Anrufdetailaufzeichnung (CDR), wenn der Repeater (30, 430) das Ende des Anrufs erfasst;
Senden der Informationen (4006) der Anrufdetailaufzeichnung (CDR) an ein Tarifbewertungsmodul (41);
Prüfen auf der Basis der Informationen (4006), ob der Kunde über einen zugehörigen Sondertarifdienst verfügt;
wobei, falls der Kunde über einen zugehörigen Sondertarifdienst verfügt, eine Bewertung gemäß dem Sondertarif erfolgt; und
vor einer Bewertung gemäß dem Sondertarif der folgende Schritt ausgeführt wird:
Prüfen, ob die Quellzelle, die in den Informationen der Anrufdetailaufzeichnung (CDR) enthalten ist, eine der Zellen, die dem Repeater (30, 430) zugeordnet sind, ist, die in der Datenbank (504) gespeichert sind, und falls dies nicht der Fall ist (505), Nichtanwenden des Sondertarifs; und
falls die Quellzelle, die in den Informationen der Anrufdetailaufzeichnung (CDR) enthalten ist, eine der Zellen ist, die dem Repeater (30, 430) zugeordnet sind, der folgende Schritt ausgeführt wird:
Senden (4008) des Folgenden an den Repeaterserver (48): Telefonnummer, die dem Repeater (30, 430) zugeordnet ist, des Kunden, der den Anruf aufgebaut hat; Datum und Startzeit der zugehörigen Anrufdetailaufzeichnung (CDR); Datum und Endzeit der Anrufdetailaufzeichnung (CDR); und Identifizierer der Zelle, von der aus der Anruf erfolgt ist;
so dass der Repeaterserver (48) auf der Basis der Daten bestätigen kann, ob es sich um einen Anruf mit einem Sondertarif handelt oder nicht;
wobei das Verfahren **dadurch gekennzeichnet ist, dass** der Repeaterserver (48) die folgenden Prüfungen durchführt:
derselbe prüft mittels der Telefonnummer, die dem Repeater (30, 430) zugeordnet ist, ob der Repeater (30, 430) zu der Startzeit des Anrufs aktiv war, und:
falls derselbe nicht aktiv war (508), wird dem Tarifbewertungsmodul (41) angezeigt, dass es sich nicht um einen Anruf mit einem Sondertarif handelt;
falls derselbe aktiv war (509), wird eine neue Prüfung durchgeführt, um zu erfahren, ob der Repeater zu dem Zeitpunkt des Beendens des Anrufs aktiv war oder nicht, und:
falls derselbe nicht aktiv war (510), wird dem Tarifbewertungsmodul (41) angezeigt, dass es sich nicht um einen Anruf mit einem Sondertarif handelt;
falls derselbe aktiv war, wird abhängig von der Quellzelle des Anrufs und der Zelle, die dem Repeater (30, 430) einen Dienst bereitstellt, eine Prüfung durchgeführt (511), und:
falls dieselben nicht übereinstimmen (512), wird dem Tarifbewertungsmodul (41) angezeigt, dass es sich nicht um einen Anruf mit einem Sondertarif handelt;
falls dieselben übereinstimmen (513), wird angezeigt, dass es sich um einen Anruf mit einem Sondertarif handelt.

2. Verfahren gemäß Anspruch 1, bei dem die Informationen (4006, 501) der Anrufdetailaufzeichnung (CDR) Folgendes aufweisen: die anrufende Telefonnummer, die angerufene Telefonnummer, Datum und Startzeit des Anrufs, Dauer des Anrufs, Quellzelle und Anruftyp.

3. Verfahren gemäß einem der vorhergehenden Ansprüche, das den Schritt eines Unterscheidens und Kennzeichnens des Verkehrs, der durch den Repeater (30, 430) übertragen wird, gegenüber dem gesamten angesammelten Verkehr zu der Zelle (39) hin aufweist.

4. Verfahren gemäß einem der vorhergehenden Ansprüche, das den Schritt eines Kennzeichnens des Profils des Benutzers des Dienstes, der durch den Repeater (30, 430) unterstützt wird, auf der Basis der Informationen der Anrufdetailaufzeichnung (CDR) aufweist.

5. Verfahren gemäß einem der vorhergehenden Ansprüche, das den Schritt eines Begrenzens des Betriebsbereichs des Repeaters (30, 430) auf ein bestimmtes Gebiet, das aus den Koordinaten des Zuhauses oder Büros des Benutzers berechnet wird, aufweist.

6. System für die Bereitstellung eines Dienstes in einem Mobiltelefonnetz, das folgende Merkmale aufweist:
einen Mobiltelefonrepeater (30, 430), der konfiguriert ist, mit zumindest einer Zelle (39) eines Mobiltelefonnetzes verbunden zu sein und zumindest einem Mobilendgerät einen Dienst bereitzustellen,
eine Datenbank (504), die konfiguriert ist, den Identifizierer der zumindest einen Zelle (39), die dem Repeater (30, 430) zugeordnet ist, zu speichern,
ein Tarifbewertungsmodul (41),
einen Repeaterserver (48), der konfiguriert ist, von dem Repeater (30, 430) eine Nachricht, die berichtet, dass der Repeater (30, 430) begonnen hat, einen Anruf zu übertragen, oder eine Nachricht (34), die berichtet, dass der Repeater (30, 430) ein Übertragen eines Anrufs beendet hat, zu empfangen,
wobei der Repeaterserver (48) konfiguriert ist, eine Anrufdetailaufzeichnung (CDR) zu erzeugen, um Informationen des Anrufs zu speichern, die Anrufdetailaufzeichnung (CDR) zu schließen und die Informationen (4006) der Anrufdetailaufzeichnung (CDR) an das Tarifbewertungsmodul (41) zu senden;
wobei das Tarifbewertungsmodul (41) konfiguriert ist zum:
Prüfen auf der Basis der Informationen (4006), ob der Kunde über einen zugehörigen Sondertarifdienst verfügt, und
Bewerten gemäß dem Sondertarif, ob der Kunde über einen zugehörigen Sondertarifdienst verfügt; und wobei
das Tarifbewertungsmodul (41) konfiguriert ist, vor einem Bewerten gemäß dem Sondertarif zu prüfen, ob die Quellzelle des Anrufs eine der Zellen ist, die dem Repeater (30, 430) zugeordnet sind, und falls dies der Fall ist, das Folgende an den Repeaterserver (48) zu senden (4008): Telefonnummer, die dem Repeater (30, 430) zugeordnet ist, des Kunden, der den Anruf aufgebaut hat; Datum und Startzeit der zugehörigen Anrufdetailaufzeichnung (CDR); Datum und Endzeit der Anrufdetailaufzeichnung (CDR); und Identifizierer der Zelle, von der aus der Anruf erfolgt ist;
wobei das System **dadurch gekennzeichnet ist, dass** der Repeaterserver (48) konfiguriert ist zum:
Prüfen, ob der Repeater (30, 430) zu der Startzeit des Anrufs aktiv war;
Prüfen, falls der Repeater zu der Startzeit aktiv war, ob derselbe zu dem Zeitpunkt des Beendens des Anrufs aktiv war, und
Prüfen, falls der Repeater zu dem Zeitpunkt des Beendens des Anrufs aktiv war, ob die Quellzelle des Anrufs und die Zelle, die dem Repeater (30, 430) einen Dienst bereitstellt, übereinstimmen, und, falls sie übereinstimmen, ist der Repeaterserver ferner konfiguriert, anzuzeigen, dass es sich um einen Anruf mit einem Sondertarif handelt.

## Revendications

1. Procédé pour la fourniture d'un service dans un réseau de téléphonie mobile comprenant au moins un répéteur (30, 430) configuré pour être connecté à au moins une cellule (39) d'un réseau de téléphonie mobile et pour fournir un service à au moins un terminal mobile, dans lequel une base de données (504) comporte, stockés dans celle-ci, les identifiants de ladite au moins une cellule (39) associée audit répéteur (30, 430), dans lequel le procédé comprend :
- le rapport (32, 4004) de l'activation du répéteur (30, 430) à un serveur de répéteur (48) et la génération d'un Enregistrement de Détail d'Appel (CDR) afin de stocker des informations dudit appel quand ledit répéteur (30, 430) détecte le début d'un appel à liaison ascendante (UL) ;
- le rapport (34, 4005) de la désactivation du répéteur (30, 430) audit serveur (48) et la fermeture dudit Enregistrement de Détail d'Appel (CDR) quand ledit répéteur (30, 430) détecte la fin dudit appel ,
- l'envoi des informations (4006) dudit Enregistrement de Détail d'Appel (CDR) à un module de tarification (41) ;
- le fait de vérifier si le client a un service de tarif spécial associé sur la base desdites informations (4006) ;
dans lequel, si le client a un service de tarif spécial associé, la tarification se fait en fonction dudit tarif spécial ; et
avant la tarification en fonction dudit tarif spécial, l'étape suivante est réalisée ;
- Vérification pour déterminer si la cellule source incluse dans les informations de l'Enregistrement de Détail d'Appel (CDR) est l'une des cellules associées au répéteur (30, 430) stockées dans ladite base de données (504) et, si ce n'est pas le cas (505), la non-application dudit tarif spécial ; et
si la cellule source incluse dans les informations de l'Enregistrement de Détail d'Appel (CDR) est l'une des cellules associées au répéteur (30, 430), l'étape suivante est réalisée :
- l'envoi (4008) de ce qui suit au serveur de répéteur (48) : numéro de téléphone associé au répéteur (30, 430) du client qui a établi l'appel ; date et heure de début de l'Enregistrement de Détail d'Appel (CDR) associé ; date et heure de fin de l'Enregistrement de Détail d'Appel (CDR) ; et identifiant de la cellule d'où l'appel a été fait ;
de telle sorte que le serveur de répéteur (48) peut confirmer s'il s'agit ou non d'un appel avec un tarif spécial sur la base desdites données ;
le procédé est **caractérisé en ce que** le serveur de répéteur (48) effectue les
vérifications suivantes :
- par le biais du numéro de téléphone associé au répéteur (30, 430), il vérifie si le répéteur (30, 430) était actif à l'heure de début de l'appel, et :
- s'il n'était pas actif (508), il est indiqué au module de tarification (41) qu'il ne s'agit pas d'un appel à tarif spécial ;
- s'il était actif (509), une nouvelle vérification est réalisée afin de savoir si le répéteur était ou non actif à l'heure de fin de l'appel, et :
- s'il n'était pas actif (510), il est indiqué au module de tarification (41) qu'il ne s'agit pas d'un appel à tarif spécial ;
- s'il était actif, une vérification est réalisée (511) en fonction de la cellule source de l'appel et de la cellule fournissant le service au répéteur (30, 430), et :
- s'ils ne coïncident pas (512), il est indiqué au module de tarification (41) qu'il ne s'agit pas d'un appel à tarif spécial ;
- s'ils coïncident (513), il est indiqué qu'il s'agit d'un appel à tarif spécial.

2. Procédé selon la revendication 1, dans lequel lesdites informations (4006, 501) dudit Enregistrement de Détail d'Appel (CDR) comprennent : le numéro de téléphone appelant, le numéro de téléphone appelé, la date et l'heure du début dudit appel, la durée dudit appel, la cellule source et le type d'appel.

3. Procédé selon l'une quelconque des revendications précédentes, comprenant l'étape consistant à différencier et à caractériser le trafic passé par le répéteur (30, 430) vis-à-vis du trafic total regroupé à la cellule (39).

4. Procédé selon l'une quelconque des revendications précédentes, comprenant l'étape consistant à caractériser le profil de l'utilisateur du service supporté par ledit répéteur (30, 430) sur la base des informations dudit Enregistrement de Détail d'Appel (CDR).

5. Procédé selon l'une quelconque des revendications précédentes, comprenant l'étape consistant à limiter la plage de fonctionnement dudit répéteur (30, 430) à une zone déterminée calculée à partir des coordonnées du domicile ou du bureau de l'utilisateur.

6. Système pour la fourniture d'un service dans un réseau de téléphonie mobile comprenant :
- un répéteur de téléphonie mobile (30, 430) configuré pour être connecté à au moins une cellule (39) d'un réseau de téléphonie mobile et pour fournir un service à au moins un terminal mobile,
- une base de données (504) configurée pour stocker les identifiants de ladite au moins une cellule (39) associée audit répéteur (30, 430),
- un module de tarification (41)
- un serveur de répéteur (48) configuré pour recevoir à partir dudit répéteur (30, 430) un message (32) rapportant que le répéteur (30, 430) a commencé à passer un appel ou un message (34) rapportant que le répéteur (30, 430) a fini de passer un appel,
dans lequel ledit serveur de répéteur (48) est configuré pour générer un Enregistrement de Détail d'Appel (CDR) afin de stocker des informations dudit appel, pour fermer ledit Enregistrement de Détail d'Appel (CDR) et pour envoyer les informations (4006) dudit Enregistrement de Détail d'Appel (CDR) audit module de tarification (41) ;
dans lequel ledit module de tarification (41) est configuré :
- pour vérifier si le client a un service de tarif spécial associé sur la base desdites informations (4006), et
- pour tarifer en fonction dudit tarif spécial si le client a un service de tarif spécial associé ; et dans lequel
avant la tarification en fonction dudit tarif spécial, ledit module de tarification (41) est configuré pour vérifier si la cellule source de l'appel est l'une des cellules associées au répéteur (30, 430) et si c'est le cas, pour envoyer (4008) les informations suivantes au serveur de répéteur (48) : numéro de téléphone associé au répéteur (30, 430) du client qui a établi l'appel ; date et heure de début de l'Enregistrement de Détail d'Appel (CDR) associé ; date et heure de fin de l'Enregistrement de Détail d'Appel (CDR) ; et identifiant de la cellule d'où l'appel a été fait ;
le système est **caractérisé en ce que** ledit serveur de répéteur (48) est configuré :
- pour vérifier si le répéteur (30, 430) était actif à l'heure de début de l'appel ;
- si le répéteur était actif à l'heure de début, pour vérifier s'il était actif à l'heure de fin de l'appel et
- si le répéteur était actif à l'heure de fin de l'appel, pour vérifier si la cellule source de l'appel et la cellule fournissant le service au répéteur (30, 430) coïncident et s'ils coïncident, ledit serveur de répéteur est en outre configuré pour indiquer qu'il s'agit d'un appel à tarif spécial.
